# EUROPÄISCHE PATENTSCHRIFT

(11) **EP 1 633 799 B1**
(45) Veröffentlichungstag und Bekanntmachung des Hinweises auf die Patenterteilung: **15.10.2008**
(21) Anmeldenummer: 04735884.1
(22) Anmeldetag: 03.06.2004
(51) Int. Cl.: C08G 65/30

(54) **HERSTELLUNG VON POLYETHERALKOHOLEN UNTER VERWENDUNG DER DMC-KATALYSE**
PRODUCTION OF POLYETHER ALCOHOLS BY USING DMC CATALYSIS
PRODUCTION DE POLYETHERALCOOLS PAR CATALYSE PAR CYANURE DE METAL DOUBLE

(30) Priorität: 03.06.2003 DE 10324998
(43) Veröffentlichungstag der Anmeldung: 15.03.2006
(73) Patentinhaber: BASF SE, 67056 Ludwigshafen (DE)
(72) Erfinder: OSTROWSKI, Thomas, 68199 Mannheim (DE); RUPPEL, Raimund, 01099 Dresden (DE); BAUM, Eva, 01987 Schwarzheide (DE); HARRE, Kathrin, 01109 Dresden (DE)
(74) Vertreter: Isenbruck, Günter
(86) Internationale Anmeldenummer: PCT/EP2004/006011
(87) Internationale Veröffentlichungsnummer: WO 2004/106408

(56) Entgegenhaltungen:
- WO-A-01/27185
- WO-A-92/14773
- WO-A-03/025045

## Beschreibung

Die vorliegende Erfindung betrifft ein Verfahren zur Herstellung von Polyetherolen umfassend die Umsetzung mindestens eines Alkylenoxids mit mindestens einer Starterverbindung in Gegenwart mindestens einer Doppelmetallcyanid-Verdindung zu einem Polyetherol und das Behandeln des erhaltenden Polyetherols mit Wasserdampf oder mit einem Inertgas und Wasserdampf, die nach einem derartigen Verfahren erhältlichen Polyetherole selbst sowie deren Verwendung für die Synthese von Polyurethanen.

Verfahren zur Herstellung von Polyetherolen sind prinzipiell aus dem Stand der Technik bekannt. Auch die Verwendung von Polyetherolen zur Synthese von Polyurethanen ist prinzipiell bekannt. Polyetheralkohole können beispielsweise durch basen- oder säurekatalysierte Polyaddition von Alkylenoxiden an polyfunktionelle Starterverbindungen hergestellt werden. Als Starterverbindungen sind beispielsweise Wasser, Alkohole, Säuren oder Amine oder Gemische ans zwei oder mehr davon geeignet. Der Nachteil derartiger Herstellungsverfahren liegt insbesondere darin, dass aufwendige Reinigangsschritte nötig sind, um die Katalysatorreste vom Reaktionsprodukt abzutrennen. Darüber hinaus steigt bei derartig hergestellten Polyetherpolyolen mit zunehmender Kettenlänge der Gehalt an monofunktionellen Produkten und geruchsintensiven Verbindungen, die für die Polyurethan-Herstellung nicht erwünscht sind.

Multimetallcyanid- Verbindungen sind aus dem Stand der Technik als Katalysatoren für Polyadditionen, insbesondere für ring-öffnende Polymerisationen von Alkylenoxiden bekannt, wie beispielsweise in der EP-A 0 892 002, EP-A 0 862 977 und in der EP-A 0 755 716 beschrieben. DMC-Verbindungen weisen bei der Polymerisation von Epoxiden eine hohe Aktivität als Katalysator auf.

Die WO 01/16209 beschreibt ein Verfahren zur Herstellung von Polyetheralkoholen durch katalysierte Anlagerung von Ethylenoxid und Propylenoxid an H-funktionelle Starterverbindungen in Gegenwart einer Multimetallcyanid-Verbindung. Die WO 00/78837 beschreibt die Verwendung von mittels Multimetallcyanid-Katalysatoren aus Propylenoxid hergestellten Polyetherpolyolen zur Herstellung von Polyurethan-Weichschäumen. Problematisch ist hierbei, dass Verunreinigungen im Polyetherpolyol, die durch Nebenreaktionen entstehen können, zu einer Verunreinigung des daraus hergestellten Polyurethans führen. In diesem Zusammenhang sind insbesondere niedermolekulare Verbindungen zu nennen, die zu einer Geruchsbelästigung führen können.

Der Geruch von Weichschaum-Polyethern stellt ein wichtiges Qualitätskriterium dar. Der enge Kontakt der Schaumstoffe mit dem menschlichen körper führt dazu, dass störende Gerüche wie auch entweichende Produkte schädlich für den Organismus sein können.

Es ist daher notwendig, die Konzentration niedermolekularer Stoffe in den für die Herstellung der Schaumstoffe erforderlichen Komponenten zu minimieren. Da sowohl die Ansgangsstoffe für die Herstellung von Polyetherolen (PO und EO) zahlreich Nebenprodukte enthalten, als auch bei der Reaktion aufgrund unerwünschter Nebenreaktionen weitere Komponenten entstehen, ist eine Reinigung des Polyetherols nach der Synthese erforderlich. Derartige Verunreinigungen können in den aus den Polyetherpolyolen hergestellten Polyurethanen in vielen Fällen zu geruchsintensiven Verbindungen führen. Dadurch sind die Polyurethane oder Polyurethan-Schaumstoffe nur eingeschränkt einsetzbar. Die Reduktion der Verunreinigungen in Polyetheralkoholen ist daher von vielfältigem Interesse. Insbesondere für den Einsatz in der Automobil- und Möbelindustrie werden zunehmend Polyurethane verlangt, die möglichst frei von Gerachsstoffen und Emissionen sind.

So beschreibt beispielsweise die EP-B 0 776 922 ein Verfahren zur Synthese von Polyetherpolyolen unter Verwendung von Doppelmetallcyanid-Verbindungen, wobei im Anschluss an die Alkylenoxid-Addition an die Starterverbindung verbleibendes Alkylenoxid bei niedrigem Vakuum, gegebenenfalls unter Behandlung mit Stickstoff, entfernt wird.

Ausgehend von diesem Stand der Technik bestand eine Aufgabe der vorliegenden Erfindung darin, weitere Verfahren zur Herstellung von Polyetherolen bereit zu stellen, die zum einen kostengünstig sind und darüber hinaus Produkte liefern, die arm an niedermolekularen Nebenprodukten sind.

Erfindungsgemäß wird diese Aufgabe gelöst durch ein Verfahren zur Herstellung mindestens eines Polyetherols mindestens umfassend die folgenden Schritte
(1) Umsetzung mindestens eines Alkylenoxids mit mindestens einer Starterveibindung in Gegenwart mindestens einer Doppelmetallcyanid-Verbindung zu einem Polyetherols; und
(2) Behandeln des Polyetherols aus Schritt (1) mit Wasserdampf oder mit einem Inertgas und Wasserdampf, wobei während der Behandlung gemäß Schritt (2) ein pH-Wert von kleiner als to vorliegt und wobei Schritt (2) innerhalb von 12 Stunden nach Schritt (1) durchgeführt wird.

Gemäß dem erfindungsgemäßen Verfahren wird zunächst ein Polyetherol hergestellt und anschließend mit Wasserdampf oder mit Inertgas und mit Wasserdampf behandelt. Das erfindungsgemäße Verfahren führt dabei zu Polyetherolen, die einen überraschend geringen Anteil an Verunreinigung aufweisen. Dabei ist es insbesondere überraschend, dass das Behandeln mit Wasserdampf von Polyetherolen, die mittels DMC-Katalyse synthetisiert wurden, zu einer effektiveren Abtrennung von Verunreinigungen führt, als das entsprechende Behandeln von Polyetherolen, die mittels KOH-Synthese erhalten wurden. Dies ist beispielsweise deswegen überraschend, da das Behandeln von Polyetherolen, die noch DMC-Katalysatorreste aufweisen, grundsätzlich problematisch erscheint So könnte beispielsweise ein Kettenabbau auftreten.

Das erfindungsgemäße Behandeln mit Wasserdampf bzw. mit einem Gemisch aus Wasserdampf und Inertgas führt zu einem besonders kostengünstigen verfahren, da der Wasserdampf im Anschluss an die Synthese kondensiert werden kann. Durch die Kondensation des Wasserdampfs verringert sich die hydrodynamische Gasmenge, die durch das Abluftsystem abgeführt werden muß. Dies verkleinert sowohl die Vakuumleitungen als auch die Apparate zur Vakummerzeugung, was die Investitionskosten senkt. Bei Verwendung von nicht kondensierbaren Gasen muß die gesamte hydrodynamische Last über die Leitungen und Vakummanlagen verarbeitet werden. Im Rahmen der vorliegenden Erfindung ist es damit besonders bevorzugt, das gemäß Schritt (1) erhaltene Polyetherol im Schritt (2) mit Wasserdampf alleine zu behandeln.

In einer bevorzugten Ausführungsform betrifft die vorliegende Erfindung daher ein Verfahren zur Herstellung mindestens eines Polyetherols, wobei das Behandeln gemäß Schritt (2) mit Wasserdampf alleine durchgeführt wird.

Erfindungsgegemäs erfolgt das Behandeln gemäß Schritt (2), also ein Stripp-Vorgang, solange das Produkt der Umsetzung gemäß Schritt (1) frisch ist. Erfindungsgemäß erfolgt die Entfernung störender Geruchsstoffe in kürzerer Zeit, wenn das Produkt frisch ist. Das ist insofern überraschend, als der Katalysator noch aktiv ist und beispielsweise Reaktionen des Stripp-Medium (Wasser) mit dem Polyetherol erfolgen könnten. Das mehrere Tage bei 20°C gelagerte Produkt ist deutlich schwieriger zu desodorieren. Unter einem frischen Produkt wird dabei im Rahmen der vorliegenden Erfindung verstanden, dass das Produkt nach Beendigung der Umsetzung gemäß Schritt (1) nicht länger als 12 Stunden gelagert wurde.

Bei dem erfindungsgenäßen Verfahren wird daher Schritt (2) innerhalb von zwölf Stunden nach Schritt (1) durchgeführt, insbesondere innerhalb von sechs Stunden nach Schritt (1), vorzugsweise drei Stunden nach Schritt (1), besonders bevorzugt 30 Minuten nach Schritt (1).

Erfindungsgemäß kann Schritt (2) im Reaktionsgefäß selbst oder in einem separaten Behälter durchgeführt werden. Insbesondere bevorzugt ist es erfindungsmäß, dass das Polyetherol nach Schritt (1) aus dem Reaktor abgepumpt wird und direkt in einen Stripp-Behälter überführt wird, in dem dann das Behandeln gemäß Schritt (2) erfolgt. Diese Ausführungsform hat darüber hinaus den Vorteil, dass teure Reaktorzeit eingespart werden kann, da der Schritt (2) in einem separaten Reaktionsgefäß durchgeführt wird.

Daher betrifft die vorliegende Erfindung ein Verfahren zur Herstellung mindestens eines Polyetherols, wobei Schritt (2) innerhalb von 12 Stunden nach Schritt (1) durchgeführt wird.

Als Starterverbindung eignen sich alle Verbindungen, die einen aktiven Wasserstoff aufweisen. Erfindungsgemäß bevorzugt sind als Starterverbindungen OH-funktionelle Verbindungen.

Als Starterverbindung geeignet sind erfindungsgemäß beispielsweise die folgenden Verbindungen: Wasser, organische Dicarbonsäuren, wie Bernsteinsäure, Adipinsäure, Phtalsäure und Terephthalsäure, sowie ein- oder mehrwertige Alkohole, wie Monoethylenglykol, Propandiol-1,2 und-1,3, Diethylenglykol, Dipropylenglykol, Butandiol-1,4, Hexandiol-1,6, Glycerin. Trimethylolpropan, Pentaerythrit, Sorbit und Saccharose. Bevorzugt werden als Polyetherpolyalkohole Anlagerungsprodukte von Ethylenoxid und/oder Propylenoxid an Wasser, Monoethylenglykol, Diethylenglykol, Propandiol-1,2, Diproplyenglykol Glycerin, Trimethylolpropan. Ethylendiamin, Triethanolamin, Pentaerythrit, Sorbit und/oder Saccharose einzeln oder in Mischungen eingesetzt.

Die Starterverbindungen können erfindungsgemäß auch in Form von Alkoxylaten zum Einsatz kommen. Bevorzugt sind insbesondere Alkoxylate mit einem Molekulargewicht M_{w} in Bereich von 62 bis 15000 g /Mol

Ebenso geeignet als Starterverbindungen sind jedoch auch Makromoleküle mit funktionellen Gruppen, die aktive Wasserstoff-Atome aufweisen, beispielsweise Hydroxylgruppen, insbesondere solche, die in der WO 01/16209 genannt sind.

Insbesondere bevorzugt sind als Starterverbindungen monofunktionelle oder polyfunktionelle Alkohole mit 2 bis 24 C-Atomen, besonders bevorzugt sind erfindungsgemäß Starterverbindungen mit 8 bis 15 C-Atonnen, insbesondere 10 bis 15 C-Atomen.

Für das erfindungsgemäße Verfahren können prinzipiell alle geeigneten Alkylenoxide eingesetzt werden. Geeignet sind beispielsweise C₂-C₂₀-Alkylenoxide, wie, beispielsweise Ethylenoxid, Propylenoxid, 1,2-Butylenoxid, 2,3-Butylenoxid, Isobutylenoxid, Pentenoxid, Hexenoxid, Cyclohexenoxid, Styroloxid, Dodecenepoxid, Ocatdecenepoxid, und Mischungen dieser Epoxide. Insbesondere geeignet sind Ethylenoxid, Propylenoxid, 1,2-Butylenoxid, 2,3-Butylenoxid und Pentenoxid, wobei Propylenoxid, 1,2-Butylenoxid, 2,3-Butylenoxid und Isobutylenoxid besonders bevorzugt sind.

Als DMC-Verbindung können prinzipiell alle dem Fachmann bekannten geeigneten Verbindungen verwendet werden.

Als Katalysator geeignete DMC-Verbindungen sind beispielsweise in der WO 99/16775 und der DE 10117273.7 beschrieben. Insbesondere sind für die Alkoxylierung Doppelmetallcyanid-Verbindung der allgemeinen Formel I als Katalysator geeignet:

M¹ₐ[M²(CN)_{b}(A)_{c}]_{d} · fM¹_{g}Xₙ·h(H₂O) · eL·kP (I),

in der
- M¹ mindestens ein Metallion, ausgewählt aus der Gruppe bestehend aus Zn²⁺, Fe²⁺, Fe³⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg²⁺, Pd²⁺, Pt²⁺, V²⁺, Mg²⁺, Ca²⁺, Ba²⁺, Cu2⁺, La³⁺, Ce³⁺, Ce⁴⁺, Bu³⁺, Ti³⁺, Ti⁴⁺, Ag⁺, Rh²⁺, Rh³⁺, Ru²⁺, Ru³⁺ ist,
- M² mindestens ein Metallion, ausgewählt aus der Gruppe bestehend aus Fe²⁺, Fe³⁺, co²⁺, Co³⁺, Mn²⁺, Mn³⁺, V⁴⁺, V⁵⁺, Cr²⁺, Cr³⁺, Rh³⁺, Ru²⁺, Ir³⁺ ist,
- A und X unabhängig voreinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt ans der Gruppe, bestehend aus Alkoholen, Aldehyden, Ketonen, Ethern, Polyethern, Estern, Polyestern, Polycarbonat, Harnstoffen, Amiden**,** primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzehl der Ligandenmoleküle eine gebrochenen ober ganze Zahl größer 0 oder 0 ist,
- f, h und m unabhängig voneinander eine gebrochene oder ganze Zahl größer 0 oder 0 sind.

Als organische Zusatzstoff P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline **D**oppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausführungsform sind Katalysatoren der Formel (I), bei denen k größer null ist. Der bevorzugte Katalysator enthält dann mindestens eine Doppelmetallcyanid-Verbindung, mindestens einen organischen Liganden und mindestens einen organischen zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ansführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer Metallsalz-Lösung mit einer Cyanometallat-Lösung die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EP01/01893 beschrieben.

Bei einer anderen bevorzugten Ausführungsform der Katalysatoren sind e und k ungleich Null. Dabei handelt es sic,h um Doppelmetallcyanid-Katalysatoren, die einen mit Wasser mischbaren organischen Ligand (im Allgemeinen in Mengen von 0,5 bis 30 Gew.%) und einen organischen Zusatzstoff (im Allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden wie in der US 5,158,922 beschrieben.

Insbesondere als Katalysator geeignet sind für die Alkoxylierung Doppelmetallcyanid-Verbindungen, die Zink. Kobalt oder Eisen oder zwei davon enthalten. Besonders geeignet ist beispielsweise Berliner Blau.

Bevorzugt werden kristalline DMC-Verbindungen eingesetzt. In einer bevorzugten Ausführungsform wird eine kristalline DMC-Verbindung vom Zn-Co-Typ als Katalysator verwendet, der als weitere Metallsalzkomponente Zinkacetat enthält. Derartige Verbindungen kristallisieren in monokliner Struktur und weisen einen plättchenförmigen Habitus auf. Derartige Verbindungen werden beispielsweise in der WO 00/74845 oder der PCT/EP01/01893 beschrieben.

Als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Vebindungen können als Pulver, Paste oder Suspension eingesetzt werden oder zu einem Formkörper verformt werden, in Formkörpern, Schäume oder ähnliches eingebracht werden oder auf Formkörper, Schäume oder ähnliches aufgebracht werden.

Die zur Alkoxylierung eingesetzte Katalysator-Konzentration bezogen auf das Endmengengerüst ist typischerweise kleiner als 2000 ppm, bevorzugt kleiner als 1000 ppm, insbesondere kleiner als 500 ppm, besonders bevorzugt kleiner als 100 ppm, beispielsweise kleiner als 50 ppm.

Die Additionsreaktion wird bei Temperaturen von etwa 90 bis 240°C, vorzugsweise von 120 bis 180°C, im geschlossenen Gefäß ausgeführt. Das Alkylenoxid wird dem Reaktionsgemisch unter dem bei der gewählten Reaktionstemperatur herrschenden Dampfdruck des Alkylenoxidgemisches zugeführt. Gewünschtenfalls kann das Alkylenoxid, insbesondere Ethylenoxid, mit bis zu etwa 30 bis 60 % mit einem Inertgas verdünnt werden. Dadurch wird eine zusätzliche Sicherheit gegen explosionsartigen Zerfall des Alkylenoxids, insbesondere des Ethylenoxids, gegeben.

Wird ein Alkylenoxidgemisch eingesetzt, so werden Polyetherketten gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht, so erhält man Polyetherketten mit blockartiger Verteilung der Alkylenoxidbausteine.

Die Länge der Polyetherketten schwankt innerhalb des Reaktionsprodukts statistisch um einen Mittelwert der sich im Wesentlichen ans der Zusatzmenge ergebenden stöchiometrischen Werte.

Die Zugabe von Säure vor dem Behandeln gemäß Schritt (2), d.h. vor dem Strippen, oder vor der Synthese gemäß Schritt (1) kann den Stripp-Prozess erleichtern. Es ist beispielsweise möglich, dass als Acetale an die Alkohol-Endgruppen gebundene Aldehyde durch die Säurezugabe gespalten werden, was zu kürzeren Stripp-Zeiten führen kann. Erfindungsgemäß liegt während der Behandlung gemäß Schritt (2) ein pH-Wert von kleiner als 10 vor. Erfindungsgemäß sollte jedoch der pH-Wert nicht unter einen Wert von 5,0, bevorzugt nicht unter 5,5 sinken, da eine zu große Zugabe von Säure eine anschließende Polyurethan-Synthese stört Es wurde festgestellt, dass die mögliche Spaltung der Polyetherkette durch die Säure unter Bindung niedermolekularer Produkte nicht nachteilig für das Stripp-Fagebnis und die Stripp-Zeit ist.

Demnach betrifft die vorliegende Erfindung ein Verfahren zur Herstellung mindestens eines Polyetherols, wobei während der Behandlung gemäß Schritt (2) ein pH-Wert von kleiner als 10 vorliegt.

Erfindungsgemäß liegt die Säurezahl des Polyetherols nach der Säurezugabe vorzugsweise in einem Bereich von 0,01 bis 0,5, bevorzugt 0,01 bis 0,1, besonders bevorzugt 0,01 bis 0,05 mg KOH/g.

In einer weiteren bevorzugten Ausführungsform betrifft die vorliegende Erfindung daher ein Verfahren zur Herstellung mindestens eines Polyetherols, wobei das Polyetherol vor dem Behandeln gemäß Schritt (2) eine Säurezahl von 0,01 bis 0,5 mg KOH/g aufweist

Prinzipiell eignen sich im Rahmen der vorliegenden Erfindung alle dem Fachmann bekannten geeigneten Säuren zur Einstellung des pH-Werts bzw. der Säurezahl. Erfindungsgemäβ besonders geeignet sind Mineralsäuren wie beispielsweise Schwefelsäure, Phosphorsäure, Chlorsäure, Perchlorsäure, Iodsäure, Periodsäure, Bromsäure oder Perbromsäure, bevorzugt Schwefelsäure oder Phosphorsäure.

Das erfindungsgemäße Verfahren kann diskontinuierlich oder kontinuierlich geführt werden. Vorzugsweise wird das erfindungsgemäβe Verfahren diskontinuierlich durchgeführt.

Daher betrifft die vorliegende Erfindung in einer weiteren Ausführungsform ein Verfahren zur Herstellung mindestens eines Polyetherols, wobei das Verfahren diskontinuierlich durchgeführt wird.

Erfindungsgemäβ kann für das Behandeln gemäß Schritt (2) eine reine Blasensäule oder eine gerührte Blasensäule eingesetzt werden, sofern das Verfahren im Batch-Betrieb geführt wird. Dabei ist es erfindungsgemäß bevorzugt, eine reine Blasensäule einzusetzen. Im Batch-Betrieb hat sich gezeigt, dass eine reine Blasensäule effektiver als eine gerührte Blasensäule ist Dies ist überraschend, weil zu erwarten ist, dass in der gerührten Blasensäule die Verweilzeit der Blasen länger ist sowie dass große Blasen zerschlagen werden und dadurch der Stopp-Vorgang effektiver sein sollte.

Erfindungsgemäß ist es darüber hinaus möglich, dass dem Reaktionsgemisch oder einer der Komponenten vor oder nach der Umsetzung gemäß Schritt (1) oder auch während dem Behandeln gemäß Schritt (2) ein Stabilisator zugesetzt wird. Dies kann die Bildung von unerwünschten Nebenprodukten aufgrund von Oxidationsprozessen verhindern. In einer weiteren bevorzugten Ausführungsform betrifft die vorliegende Erfindung daher ein Verfahren zur Herstellung mindestens eines Polyetherols, wobei vor oder während dem Behandeln gemäß Schritt (2) ein Stabilisator zugegeben wird.

Im Rahmen der vorliegenden Erfindung können prinzipiell alle dem Fachmann bekannten Stabilisatoren eingesetzt werden.

Diese Stoffkomponenten umfassen Radikalfänger, Peroxidzersetzer, Synergisten und Metalldesaktivatoren.

Als Antioxidantien werden beispielsweise sterisch gehinderte Phenole und aromatische Amine eingesetzt.

Beispiele für geeignete Phenole sind alkylierte Monophenole wie z.B. 2,6-Di-*tert*-butyl-4-methylphenol (BHT), 2-Butyl-4,6-dimethylphenol, 2,6-Di-*tert*-butyl-4-methoxyphenol 2,6-Di-*tert*-butyl-4-ethylphenol, 2,6-Di-*tert*-butyl-4-*n*-butylphenol, 2,6-Di-*tert*-butyl-4-*iso*butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-Cyclohexylphenol 2,6-Di-*tert-*butyl-4-methoxymethylphenol, lineare oder in der Seitenkette verzweigte Nonyl-phenole, wie z.B. 2,6-Di-nonyl-4-methylphenol, 2,4-Dimethyl-6-(1'-methyl-undec-1'-yl)phenol, 2,4-Dimethyl-6-(1'-methyl-heptadec-1'-yl)phenol,2,4-Dimethyl-6-(1'-methyl-tridec-1'-yl)phenol und Mischungen davon;

Alkylthiomethylphenole, wie z.B. 2,4-Di-octylthomethyl-6-*tert*-butylphenol, 2,4-Di-octylthiomethyl-6-methylphenol, 2,4-Di-octylthiomethyl-6-ethylphenol, Octyl(3,5-di-tert-butyl-4-hydroxyphenyl)propionat (Irganox I1135), 2,6-Di-dodecylthiomethyl-4-nonylphenol;

Tocopherole, wie z.B. α-Tocopherol, β-Tocopherol, γ-Tocopherol, δ-Tocopherol und Mischungen davon;

hydroxylierte Thiodiphenylether, wie z.B. 2,2'-Thio-bis(6-*tert*-butyl-4-methylphenol), 2,2'-Thio-bis(4-octylphenol), 4,4'-Thio-bis(6-*tert*-butyl-3-methylphenol), 4,4'-Thio-bis(6-*tert-*butyl-2-methylphenol), 4,4'-Thio-bis(3,6-*di*-*sec*-amylphenol), Thiodiphenylamin (Phenothiazin), 4,4'-Bis(2,6-dimethyl-4-hydroxyphenyl)disulfid;

Alkylidenbisphenole, wie z.B. 2,2'-Methylen-bis(6-*tert*-butyl-methylphenol), 2,2'-Methylen-bis(6-*tert*-utyl-4-ethylphenol),2,2'-Methylen-bis(6-*tert*-butyl-4-butylphenol), 2,2'-Methylen-bis[4-methyl-6-(α-methylcyclohexyl)phenol)],2,2'-Methylen-bis(4-methyl-6-cyclohexylphenol), 2,2'-Methylen-bis(6-nonyl-4-methylphenol), 2,2'-Methylen-bis(4,6-di-*tert*-butylphenol), 2,2'-Ethyliden-bis(4,6-di-*tert*-butylphenol), 2,2'-Ethyliden-bis(6-*tert-*butyl-4-isobutylphenol), 2,2'-Methylen-bis[6-(α-methylbenzyl)-4-nonylphenol), 2,2'-Methylen-bis[6-(α,α-dimethylbenzyl)-4-nonylphenol),1,1-Bis(5-*tert*-butyl-4-hydroxy-2-methylphenyl)butan, 2,6-Bis(3-*tert*-butyl-5-methyl-2-hydroxy-benzyl)4-methylphenol, 1,1,3-Tris(5-*tert*-butyl-4-hydroxy-2-methylphenyl)butan, 1,1-Bis(5-*tert*-butyl-4-hydroxy-2-methylphenyl)-3-n-dodecylmercaptobutan, Ethylenglycol-bis-[3,3-bis(3'-*tert*-butyl-4'-hydroxyphenyl)butyrat, Bis(3-*tert*-butyl-4-hydroxy-5-methylphenyl)dicyclopentadien,1,1-Bis(3,5-dimethyl-2-hydroxyphenyl)butan, 2,2-Bis(3,5-di-*tert*-butyl-4-hydroxyphenyl)propan,2,2-Bis(3,5-*tert*-butyl-4-hydroxy-2-methylphenyl)-4-*n-*dodecylmercaptobutan, 1,1,5,5-Tetra(5-*tert*-butyl-4-hydroxy-2-methylphenyl)pentan;

und andere Phenole wie beispielsweise Methyl(3,5-di-*tert*-butyl-4-hydroxyphenyl)propionat (PS40), Octadecyl(3,5-di-*tert*-butyl-4-hydroxyphenyl)propionat (Irganox I1076), N,N'-Hexamethylen-bis-(3,5-di-*tert*-butyl-4-hydroxy-hydrozimtsäure)amid,Tetrakis-[methylen-(3,5-di-*tert*-butyl-4-hydroxy-hydrozimt-säure)]methan,2,2'-Oxamido-bis[ethyl-3(3,5-di-*tert*-butyl-4-hydroxyphenyl)]propionat, Tris-(3,5-di-*tert*-butyl-4-hydroxybenzyl)isocyanurat.

Beispiele für geeignete Amine sind 2,2,6,6-Tetramethylpiperidin, N-Methyl-2,2,6,6-Tetramethylpiperidin, 4-Hydroxy-2,2,6,6-Tetramethylpiperidin, Bis(2,2,6,6-tetra-methyl-4-piperidyl)sebacat, Bis(N-Methyl-2,2,6,6-tetramethyl-4-piperidyl)sebacat, butylierte und octylierte Diphenylamine (Irganox I5057 und PS30), N-Allyldiphenylamin, 4-Isopropoxydiphenylamin, N-Phenyl-1-naphthylamin, N-Phenyl-2-naphthylamin, 4-Dimethylbenzyldiphenylamin, etc..

Synergisten umfassen beispielsweise Verbindungen aus der Gruppe der Phosphite, Phosphonite, Hydroxylamine, beispielsweise Triphenylphosphit, Diphenylalkylphosphite, Phenyldialkylphosphite, Tris(nonylphenyl)phosphit, Trilaurylphosphit, Trioctadecylphosphit, Tris(2,4-di-*tert*-butylphenyl)phosphit, Diisodecylpentaerytritdiphosphit, Bis(2,4-di-*tert*-butylphenyl)pentaerythritdiphosphit, Bis(2,6-di-*tert*-butyl-4-methyl-phenyl)penta-erythritdiphosphit, Bisisodecyloxypentaerytritdiphosphit, Bis(2,4-di-*tert*-butyl-6-methylphenyl)pentaerythritdiphosphit, Bis(2,4,6-tri-*tert*-butylphenyl)pentaerythritdiphosphit, Tri-stearylsorbittriphosphit, Tetrakis(2,4-di-*tert*-butylphenyl)-4,4'-biphenylendiphosphit, 6-Isooctyloxy-2,4,8,10-tetra-*tert-*butyl-12H-dibenz[d,g]-1,3,2-dioxaphosphocin,6-Fluor-2,4,8,10-tetra-*tert*-butyl-12-methyl-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, N,N-Dibenzylhydroxylamin, N,N-Diethylhydroxylamin, N,N-Dioctylhydroxylamin, N,N-Dilanylhydroxylamin, N,N-Ditetradecylhydroxylamin, N,N-Dihexadecylhydroxylamin, N,N-Dioctadecylhydroxylamin, N-Hexadecyl-N octadecylhydroxylamin, N-Heptadecyl-N-octadecylhydroxylamin, N,N-Dialkylhydroxylamin aus hydrierten Talgfettaminen;

Metalldesaktivatoren sind z.B. N,N'-Diphenyloxalsäurediamid, N-Salicylal-N'-salicyloylhydrazin, N,N'-Bis(salicyloyl)-hydrazin, N,N-Bis(3,5-di-*tert*-butyl-4-hydroxyphenylpropionyl)hydrazin, 3-Salicyloyl-amino-1,2,4-triazol, Bis(benzyliden)oxalsäuredihydrazid, Oxanilid, Isophthalsäure-dihydrazid, Sebacinsäure-bis-phenylhydrazid, N,N'-Diacetyl-adipinsäuredihydrazid, N,N'-Bis-salicyloyl-oxalsäure-dihydrazid, N,N'-Bis-salicyloyl-thiopropionsäure-dihydrazid.

Erfindungsgemäβ bevorzugte Stabilisatoren sind 2,6-Di-*tert*-butyl-4-methylphenol (BHT), Octyl(3,5-di-*tert*-butyl-hydroxyphenyl)propionat (Irganox I1135), Thiodiphenylamin (Phenothiazin), Methyl(3,5-di-*tert*-butyl-4-hydroxyphenyl)propionat (PS40), Octadecyl(3,5-di-*tert*-butyl-4-hydroxyphenyl)propionat (Irganox I1076) und butylierte und octylierte Diphenylamine (Irganox 15057 und PS30).

Darüber hiraus beschreibt vorliegende Erfindung auch die Polyetherole erhältlich nach einem erfindungsgemäβ Verfahren. Die vorliegende Erfindung betrifft somit auch ein Polyetherol, erhältlich nach einem Verfahren mindestens umfassend die folgenden Schritte
(1) Umsetzung mindestens eines Alkylenoxids mit mindestens einer Starterverbindung in Gegenwart mindestens einer Doppelmetallcyanid-Verbindnng zu einem Polyetherol; und
(2) Behandeln des Polyetherols aus Schritt (1) mit Wasserdampf oder mit einem Inertgas und Wasserdampf, wobei während der Behandlung gemäß Schritt (2) ein pH-Wert von kleiner als 10 vorliegt und wobei Schritt (2) innerhalb von 12 Stunden nach Schritt (1) durchgeführt wird

Die Polyetherole erhältlich nach einem erfindungsgemäβen Verfahren zeichnen sich insbesondere durch einen geringen Anteil an Verunreinigungen aus. Dies äuβert sich im Wesentlichen durch den niedrigen Geruch des Polyols und geringe FOG- und VOC-Werte, die für die Automobil- und Möbelindustrie von Bedeutung sind.

Die erfindungsgemäβ hergestellten Polyetherole eignen sich aufgrund der geringen Anteile an Verunreinigungen insbesondere zur Herstellung von Polyurethanen. Daher beschreibt die vorliegende Erfindung auch die Verwendung eines Polyetherols erhältlich nach einem erfindungsgemäβen Verfahren oder eines erfindungsgemäßen Polyetherols zur Synthese von Polyurethanen.

Die erfindungsgemäβ hergestellten Polyetherole eignen sich insbesondere zur Herstellung von Polyurethan-Schaumstoffen, Polyurethan-Gieshäuten und Elastomeren. Vorzugsweise werden die erfindungsgemäβ hergestellten Polyetherole zur Synthese von Polyurethan-Weichschanm eingesetzt. Dabei kann es sich beispielsweise um Blockweichschäume oder Formweichschäume handeln. Daher betrifft die vorliegende Erfindung in einer weiteren Ausführungsform die Verwendung eines Polyetherols erhältlich nach einem erfindungsgemäßen Verfahren oder eines erfindungsgemäβen Polyetherols zur Synthese von Polyurethanen, wobei das Polyurethan ein Polyurethanweichschaum ist

Unter Polyurethan-Schaumstoffen werden insbesondere bevorzugt die in der Automobil- und Möbelindustrie verwendet werden. Derartige Polyurethane sind beispielsweise geeignet zur Herstellung von Formkörpern, insbesondere Formkörper aus Polyurethan-Blockweichschaum. Vorteilhaft ist hier der geringe Gehalt an Verunreinigungen, da so keine störenden Gerüche auftreten, die aus dem Weichschaumformteil austreten können. Darüber hinaus sind die VOC- und FOG-Werte niedrig.

Erfingungsgemäβe Formkörper sind beispielsweise Matratzen, Kissen, Formteile für die Automobilindustrie oder Polstermöbel.

Im Folgenden soll die vorliegende Erfindung anhand von Beispielen näher erläutert werden.

### BEISPIELE

### Allgemeine Herstellvorschrift:

### Katalysatorherstellung:

Die Katalysatorherstellung erfolgte gemäß Beispiel 1 der EP-A 0 862 947.

200 ml stark saurer Ionenaustauscher K2431 der Fa. Bayer AG wurden mit 80 g 37%iger Salzsäure regeneriert und mit Wasser so lange gewaschen, bis der Ablauf neutral war. Danach wurde eine Lösung von 17,8 g Kaliumhexacyanocobaltat in 100 ml Wasser auf die Austauschersäule gegeben. Die Säule wurde danach so lange eluiert, bis der Auslauf wieder neutral war. Die so gewonnenen 368 g Eluat wurden auf 40°C erwärmt und unter Rühren wurde eine Lösung von 20,0 g Zinkacetat in 100 ml Wasser zugegeben. Die entstehende Suspension wurde bei 40°C weitere 10 Minuten geführt. Danach wurden 84 g Ethylenglycoldimethylether zugegeben und die Lösung bei 40°C weitere 30 Minuten gerührt. Danach wurde der Feststoff abgesaugt und auf dem Filter mit 300 ml Ethylenglycoldimethylether gewaschen. Der so behandelte Feststoff wurde bei Raumtemperatur getrocknet. Mittels Atomadsorptionsspektroskopie wurde der Kaliumgehalt bestimmt. Es konnte kein Kalium nachgewiesen werden (Nachweisgrenze 10 ppm). Der Katalysator wurde in einem mit Phosphorsäure aufgearbeiteten Propoxylat (hergestellt mittels KOH-Katalyse, glyzeringestartet, OH-ZahL 298 mg KOH/g) dispergiert, so dass sich eine DMC-Konzentration von 4,53 % ergab.

### Polyolsynthese:

3200 g eines glyzeringestarteten und mit Phosporsäure aufgeabeitenten Propoxylats mit einer OH-Zahl von 298 mg KOH/g wurden im 201-Rührkesselreaktor mit 44 g einer 4,53%igen DMC-Katalysatorsuspension (entsprechend 100 ppm DMC-Katalysator, bezogen auf das herzustellende Produkt) versetzt und bei 120 °C und einem Vakuum von ca 40 mbar entwässert, bis der Wassergehalt unter 0,02 % lag. Anschließend wurden etwa 400 g Propylenoxid zudosiert und das Anspringen der Reaktion äbgewartet, was an einer kurzzeitigen Temperaturerhöhung und einem schnellen Abfallen des Reaktordrucks erkennbar war. Nachfolgend wurden bei gleicher Temperatur 16450 g eines Gemischs aus 14910 g Propylenoxid und 1940 g Ethylenoxid in einem Zeitraum von ca. 2,5 Stunden zudosiert. Nach Erreichen eines konstanten Reaktordrucks nach Dosierende wurden nicht umgesetzte Monomere und andere flüchtige Bestandteile im Vakuum abdestilliert, und das Produkt abgelassen.

Der erhaltene, farblose Polyetheralkohol besaß folgende Kennwerte:
- OH-Zahl: 48,8 mg KOH/g (bestimmt nach ASTM D 2849)
- Säurezahl: 0,013 mg KOH/g,
- Wassergehalt: 0,011%,
- Viskosität (25°C): 566 mPas,
- Mw: 3055g/mol,
- D: 1,375

### Beispiel 1

Frisches Produkt, direkt aus dem Reaktor, wurde gestrippt. Ein Teil dieses Produkts wurde unter Stickstoff abgekühlt und 5 Tage bei 20 °C gelagert (Stickstoffbeschleierung). Anschließend wurde auch dieses Produkt gestrippt Die Unterschiede in den Flächen der - Ansgangsprobe stellen den üblichen Messfehler der Methode dar.

Für den Strippprozess wurde eine Blasensäule (ID=10 cm) eingesetzt, die zur Temperierung einen Doppelmantel und am Boden zur Gaseinleitung einen Ringverteiler (d=4 cm) mit zahlreichen Bohrungen aufwies. Die Temperatur der Blasensäule wurde über handelsübliche Thermostaten, die mit Thermoöl betrieben werden, konstant gehalten. Das zum Strippen notwendige Wasser wurde über einen elektrischen Wasserverdampfer (GESTRA GmbH, Bremen, DINO-Elektrodampferzeuger, Typ NDD 18) verdampft und in die Blasensäule über den Ringverteiler eingespeist. Der Druck in der Blasensäule wurde mittels einer Vakuumpumpe konstant bei 300 mbar gehalten. Es wurde für Stickstoff derselbe Gasverteiler verwendet. Stickstoff wurde einer handelsüblichen Druckgasflasche entnommen (6.Oer Qualität).

Für das Strippen wurde das hergestellte Polyol unter inerten Bedingungen bei Rautemperatur mittels einer Pumpe in eine mit Stickstoff inertisierte Blasensäule gepumpt. Anschließend wurde das Polyol auf die Stripptemperatur aufgeheizt. Gleichzeitig wurde der Druck in der Blasensäule eingestellt Wasserdampf bzw. Stickstoff wurden über einen Ringverteiler eingespeist, wobei die Menge über einen Wasserdampfmesser bzw. Rotamer kontrolliert wurde. Nach dem Strippprozess mit Wasserdampf wurde dieser abgeschaltet, und das Produkt mittels Stickstoff getrocknet (13 N1/h). Der Stickstoff wurde über denselben Ringverteiler eingespeist.

Die Headspaceflächen wurden mittels Gaschromatographie bestimmt Das Polyol wurde zunächst mit 4000 ppm BHT stabilisiert. Ca. 3 g Probe wurden in 10 ml Probenflaschen eingefüllt, und diese mit hochtemperaturfesten Septa verschlossen. Anschließend wurde die Probe in den Probengeber gegeben und für genan 2 Stunden bei 140 °C getempert. Dabei bildete sich über der Flüssigkeit die Gasphase (Headspace) aus. Nach der Temperierzeit wurde die Gasphase mittels Gaschromatographie analysiert. Die Bestimmung der Headspaceflächen erfolgte mittels Flammen-Ionisations-Detektoren.

### Analysenbedingungen:

- Säule:: DB-Wax (0,25mmID, 0,25µm Filmdicke, 30 m)
- Trägergas:: Helium
- Brenngas:: Wasserstoff und synthetische Luft (optimiert)
- Vordruck:: am GC 7,5 psi
- Fluß:: 0,5 ml/min
- Temperatur (Detektor):: 250°C
- Temperatur (Injektor):: 150°C
- Temperatur (oven):: 10 min 50°C/10°/min, 240°C 20 min
- Splitverhältnis:: 1:20
- Equilibration time:: 001
- Badtemperatur:: 140°C (120°C)
- Valve/Loop Temp.:: 150°C (130°C)
- Integrationsmethode:: PO 2.MTH

**Tabelle 1.1**

| Bedingungen: 6 kg Produkt, 80 g Wasser pro Minute, Reaktordurchmesser 10 cm. Headspaceflächen bestimmt bei 140 °C, 2 h erhitzen, stabilisiertes Produkt (4000 ppm BHT). T=120°C, η_{120 °C, frisches Produkt} = 11 mPas, η_{120°C, altes Produkt} = 12,5 mPas, | | |
|---|---|---|
| Strippzeit, h | Frisches Produkt Flächen | Gealtertes Produkt Flächen |
| 0 | 254871 | 248957 |
| 2 | 51240 | 122415 |
| 4 | 24888 | 74521 |
| 6 | 2419 | 10248 |

### Beispiel 2

Beispiel 2 wurde analog zu Beispiel 1 hergestellt. Beim Strippen wurde das frische Produkt verwendet.

**Tabelle 2.1**

| Bedingungen: 6 kg Produkt, 80 g Wasser pro Minute beim Dampfstrippen, 13NL/min beim Stickstoffstrippen, Reaktordurchmesser 10 cm. Headspaceflächen bestimmt bei 140 °C, 2 h erhitzen, stabilisiertes Produkt (4000 ppm BHT). T =120 °C, η_{120 °C, frisches Produkt} = 11 mPas | | |
|---|---|---|
| Strippzeit, h | Frisches DMC-Produkt, **Dampfstrippen,** Flächen | Frisches DMC-Produkt, **Stickstoffstrippen,** Flächen |
| 0 | 254871 | 254880 |
| 2 | 51240 | 112548 |
| 4 | 24888 | 58745 |
| 6 | 2419 | 14525 |

### Beispiel 3

Beispiel 3 wurde analog zu Beispiel 1 durchgeführt. Der pH-Wert des Originalprodukts wurde anschließend durch Zugabe von Phosphorsäure auf einen Wert von 6,0 bzw. 8,0 eingestellt.

**Tabelle 3.1**

| Bedingungen: 6 kg Produkt, 80 g Dampf pro Minute, Reaktordurchmesser 10 cm, Headspaceflächen bestimmt bei 140 °C, 2 h erhitzen, stabilisiertes Produkt (4000 ppm BHT). T = 120 **°**C, η_{120 °C, frisches Produkt, pH = 6,0} = 11 mPas, η_{120 °C, frisches Produkt, pH = 8,0} = 11 mPas | | |
|---|---|---|
| Strippzeit, h | Frisches DMC-Produkt, **Dampfstrippen** Flächen pH =6,0 | Frisches DMC-Produkt, **Dampfstrippen,** Flächen pH = 8,0 |
| 0 | 254871 | 254825 |
| 2 | 51240 | 75254 |
| 4 | 24888 | 42587 |
| 6 | 2419 | 9874 |

### Beispiel 4

Beispiel 4 wurde analog zu Beispiel 1 durchgefürt. Es wurde ein Rührkessel mit 20 L Volumen eingesetzt. Der Rührkessel war mit einem Schrägblattrührer ausgestattet. Die Zufuhr von Dampf erfolgte mit Hilfe eines Begasungsrings am Reaktorboden.

**Tabelle 4.1**

| Bedingungen: 10 kg Produkt, Dampfstrippen mit 250 g Dampf pro Minute, Reaktordurchmesser 10 cm. Headspaceflächen bestimmt bei 140 °C, 2 h erhitzen, stabilisiertes Produkt (4000 ppm BHT). T =120 °C, η_{120 °C, frisches Produkt} =11 mPas | | |
|---|---|---|
| strippzeit, h | Frisches DMC-Produkt **mit Rührer** Flächen | Frisches DMC-Produkt, **ohne Kührer** Flächen |
| 0 | 258154 | 257998 |
| 2 | 121416 | 56522 |
| 4 | 58745 | 23356 |
| 6 | 15423 | 5487 |

### Beispiele 5

Beispiel 5 wurde analog zu Beispiel 1 durchgeführt. Um den Einfluß der Stabilisatorzugabe zu untersuchen, wurde zum einen vor der Synthese und vor dem Strippen Stabilisator zugesetzt. Zum Vergleich wurde ein dritter Versuch ohne Zugabe von Stabilisator durchgefürh. Für Fälle zwei und drei wurde das gleiche Produkt verwendet. Es wurde nur Dampfstrippen getestet in der Blasensäule ohne Rührer. Es wurden 1000 ppm Irganox I1135 als Stabilisator verwendet.

**Tabelle 5.1**

| Bedingungen: 6 kg Produkt, 80 g Dampf pro Minute, Reaktordurchmesser 10 cm. Headsplaceflächen bestimmt bei 140 °C, 2 h erhitzen, stabilisiertes Produkt (4000 ppm BHT). T = 120 °C, η_{120 °C, frisches Produkt, ohne Stabilisator} =11 mPas, η_{120 °C, frisches Produkt mit Stabilisator} =11 mPas, η_{120°C, °C, frisches Produkt bereits mit Stabilisator hergestellt} =11 mPas | | | |
|---|---|---|---|
| Strippzeit, h | Frisches DMC-Produkt, **Produkt ohne Stabilisator** Flächen | Frisches DMC-Produkt, **Stabilisator vor dem Strippen zugegeben** Flächen | Frisches DMC-Produkt, **StabiliSator vor der Synthese zugegeben** Flächen |
| 0 | 254871 | 255223 | 198547 |
| 2 | 51240 | 23548 | 19874 |
| 4 | 24888 | 9854 | 5875 |
| 6 | 2419 | 223 | 275 |
| Stabilisator gehalt nach dem Strippen | 0 | 850 | 800 |

## Patentansprüche

1. Verfahren zur Herstellung mindestens eines Polyetherols mindestens umfassend die folgenden Schritte
(1) Umsetzung mindestens eines Alkylenoxids mit mindestens einer Starterverbindung in Gegenwart mindestens einer Doppelmetallcyanid-Verbindung zu einem Polyetherol; und
(2) Behandeln des Polyetherols aus Schritt (1) mit Wasserdampf oder mit einem Inertgas und Wasserdampf,
wobei während der Behandlung gemäß Schritt (2) ein pH-Wert von kleiner als 10 vorliegt und wobei Schritt (2) innerhalb von 12 Stunden nach Schritt (1) durchgeführt wird.

2. Verfahren nach Anspruch 1, **dadurch gekennzeichnet, dass** das Behandeln gemäß Schritt (2) mit Wasserdampf alleine durchgeführt wird.

3. Verfahren nach einem der vorherigen Ansprüche, **dadurch gekennzeichnet, dass** das Polyetherol vor dem Behandeln gemäß Schritt (2) eine Säurezahl von 0,01 bis 0,5 mg KOH/g aufweist.

4. Verfahren nach einem der vorherigen Ansprüche, **dadurch gekennzeichnet, dass** vor oder während dem Behandeln gemäß Schritt (2) ein Stabilisator zugegeben wird.

5. Verfahren nach einem der vorherigen Ansprüche, **dadurch gekennzeichnet, dass** das Verfahren diskontinuierlich durchgeführt wird.

## Claims

1. A process for the preparation of at least one polyetherol, at least comprising the following steps
(1) reaction of at least one alkylene oxide with at least one initiator compound in the presence of at least one double metal cyanide compound to give a polyetherol; and
(2) treatment of the polyetherol from step (1) with steam or with an inert gas and steam,
wherein a pH of less than 10 is present during the treatment according to step (2) and step (2) is carried out within 12 hours after step (1).

2. The process according to claim 1, wherein the treatment according to step (2) is carried out using steam alone.

3. The process according to any of the preceding claims, wherein the polyetherol has an acid number of from 0.01 to 0.5 mg KOH/g before the treatment according to step (2).

4. The process according to any of the preceding claims, wherein a stabilizer is added before or during the treatment according to step (2).

5. The process according to any of the preceding claims, wherein the process is carried out batchwise.

## Revendications

1. Procédé de préparation d'au moins un polyétherol, comprenant au moins les étapes suivantes :
(1) réaction d'au moins un oxyde d'alkylène avec au moins un composé amorceur en présence d'au moins un composé cyanure de métal double pour donner lieu à un polyétherol ; et
(2) traitement du polyétherol de l'étape (1) avec de la vapeur d'eau ou avec un gaz inerte et de la vapeur d'eau ;
où, durant le traitement selon l'étape (2), le pH est inférieur à 10, et où l'étape (2) est réalisée en l'espace de 12 heures après l'étape (1).

2. Procédé selon la revendication 1, **caractérisé en ce que** le traitement est réalisé selon l'étape (2) avec de la vapeur d'eau seule.

3. Procédé selon l'une quelconque des revendications précédentes, **caractérisé en ce que** le polyétherol présente un indice d'acide de 0,01 à 0,5 mg KOH/g avant le traitement selon l'étape (2).

4. Procédé selon l'une quelconque des revendications précédentes, **caractérisé en ce qu'**un agent stabilisant est ajouté avant ou durant le traitement selon l'étape (2).

5. Procédé selon l'une quelconque des revendications précédentes, **caractérisé en ce que** le procédé est réalisé en discontinu.
